# EUROPÄISCHE PATENTSCHRIFT

(11) **EP 3 490 768 B1**
(45) Veröffentlichungstag und Bekanntmachung des Hinweises auf die Patenterteilung: **19.02.2025**
(21) Anmeldenummer: 17734682.2
(22) Anmeldetag: 22.06.2017
(51) Int. Cl.: B29C 45/14, B29C 33/04, B60R 21/16, B29C 45/00, B29C 45/17, B29C 45/73, B29L 31/30, B29L 12/00, B29K 623/00, B29K 23/00, B29C 35/16

(54) **VERFAHREN ZUM HERSTELLEN EINES BAUTEILVERBUNDES FÜR EIN KRAFTFAHRZEUG, BAUTEILVERBUND FÜR EIN KRAFTFAHRZEUG SOWIE KRAFTFAHRZEUG MIT DEM BAUTEILVERBUND**
METHOD FOR PRODUCING A COMPONENT ASSEMBLY FOR A MOTOR VEHICLE, COMPONENT ASSEMBLY FOR A MOTOR VEHICLE, AND MOTOR VEHICLE HAVING THE COMPONENT ASSEMBLY
PROCÉDÉ DE FABRICATION D'UN ÉLÉMENT COMPOSITE POUR UN VÉHICULE AUTOMOBILE, ÉLÉMENT COMPOSITE POUR UN VÉHICULE AUTOMOBILE ET VÉHICULE AUTOMOBILE COMPRENANT L'ÉLÉMENT COMPOSITE

(30) Priorität: 28.07.2016 DE 102016213963
(43) Veröffentlichungstag der Anmeldung: 05.06.2019
(73) Patentinhaber: Volkswagen Aktiengesellschaft, 38440 Wolfsburg (DE)
(72) Erfinder: OSTWALD, Stefan, 31174 Schellerten (DE); HEINEMANN, Olaf, 29378 Wittingen (DE)
(86) Internationale Anmeldenummer: PCT/EP2017/065407
(87) Internationale Veröffentlichungsnummer: WO 2018/019493

(56) Entgegenhaltungen:
- DE-A1- 102005 038 469
- DE-A1- 102005 038 469
- FR-A1- 2 873 613
- FR-A1- 2 873 613
- US-A1- 2005 121 818
- US-A1- 2008 111 281

## Beschreibung

Die vorliegende Erfindung betrifft ein Verfahren zum Herstellen eines Bauteilverbundes für ein Kraftfahrzeug, wobei der Bauteilverbund einen Grundkörper für eine Instrumententafel des Kraftfahrzeugs aufweist. Die vorliegende Erfindung betrifft ferner einen Bauteilverbund für ein Kraftfahrzeug sowie ein Kraftfahrzeug.

Im Stand der Technik ist es bekannt, komplexe Bauteile für ein Kraftfahrzeug aus verschiedenen Einzelkomponenten bzw. Bauteilstrukturen zusammen zu stellen und anschließend zusammen zu bauen. Dies führt zu entsprechend hohen Kosten, da nicht nur ein erhöhter Zeitaufwand zum Fügen der verschiedenen Bauteilstrukturen erforderlich ist, sondern auch die verschiedenen Bauteilstrukturen jeweils hergestellt, transportiert und gelagert werden müssen.

Bei einem Bauteilverbund, der aus einer Vielzahl von verschiedenen Bauteilstrukturen besteht, ist außerdem eine Vielzahl von verschiedenen Verbindungselementen erforderlich, die zum Verbinden der jeweiligen Bauteilstrukturen verwendet werden. Dies führt zu dem Problem, dass ein entsprechend ausgestalteter Bauteilverbund ein relativ hohes Gewicht aufweist. Das Gewicht gilt es jedoch im Fahrzeugbau zu minimieren.

Für eine Gewichtsreduzierung kann die Wandstärke einer Bauteilstruktur oder eines Bauteilverbundes verringert werden. Dies führt jedoch auch zu einer entsprechend verringerten Steifigkeit und/oder verringerten Festigkeit. Außerdem kann die Wandstärke mit üblichen Herstellungsverfahren nur bis zu einem gewissen Grad reduziert werden. Neben einer minimal erforderlichen Steifigkeit an bestimmten Stellen der Bauteilstruktur ist auch eine gewünschte Oberflächengüte eine Bedingung, aufgrund welcher die Wandstärke von bestimmten Bauteilstrukturen nicht beliebig reduziert werden kann oder darf.

Aus der deutschen Patentanmeldung DE 10 2010 031 814 A1 ist es bekannt, Kunststoffteile wie zum Beispiel Zier- und Verblendungsteile im Automobilbereich für Instrumententafeln, Türverkleidungen und Säulenverkleidungen mittels eines Gasaußendruckverfahrens herzustellen. Der Anwendungsbereich des Gasaußendruckverfahrens ist dabei auf kleine Bauteilstrukturen beschränkt.

Die DE 10 2005 038 469 A1 beschreibt ein Verfahren zum Herstellen eines Spritzguss-Kunststoffbauteils und ein entsprechend hergestelltes Kunststoffbauteil. Die DE 601 06 348 T2 offenbart ein Spritzgießverfahren. In der DE 10 2006 058 546 A1 ist eine Airbagklappe für einen Beifahrersitz und ein Verfahren zur Herstellung derselben gezeigt.

Ein weiteres Verfahren zum Herstellen eines Spritzguss-Kunststoffbauteils ist aus der FR 2 873 613 A1 bekannt. Ferner ist ein Verfahren zur Herstellung einer Airbag- Anordnung aus der US 2005/0121818 A1 bekannt.

Aufgabe der vorliegenden Erfindung ist es, der voranstehend beschriebenen Problematik zumindest teilweise Rechnung zu tragen. Insbesondere ist es Aufgabe der vorliegenden Erfindung, ein verbessertes Verfahren zum Herstellen eines Bauteilverbundes für ein Kraftfahrzeug, einen verbesserten Bauteilverbund für ein Kraftfahrzeug sowie ein Kraftfahrzeug mit einem entsprechend verbesserten Bauteilverbund zur Verfügung zu stellen.

Die voranstehende Aufgabe wird durch die Gegenstände der Patentansprüche gelöst. Insbesondere wird die voranstehende Aufgabe durch das Verfahren gemäß Anspruch 1, den Bauteilverbund gemäß Anspruch 7 sowie das Kraftfahrzeug gemäß Anspruch 9 gelöst. Weitere Merkmale und Details der Erfindung ergeben sich aus den Unteransprüchen, der Beschreibung und den Zeichnungen. Dabei gelten Merkmale, die im Zusammenhang mit dem erfindungsgemäßen Verfahren beschrieben sind, selbstverständlich auch im Zusammenhang mit dem erfindungsgemäßen Bauteilverbund, dem erfindungsgemäßen Kraftfahrzeug und jeweils umgekehrt, sodass bezüglich der Offenbarung zu den einzelnen Erfindungsaspekten stets wechselseitig Bezug genommen wird bzw. werden kann.

Gemäß eines ersten Aspekts der vorliegenden Erfindung wird ein Verfahren zum Herstellen eines Bauteilverbundes für ein Kraftfahrzeug zur Verfügung gestellt, wobei der Bauteilverbund einen Grundkörper für eine Instrumententafel des Kraftfahrzeugs sowie wenigstens ein Funktionsbauteil aufweist. Bei dem Verfahren wird das wenigstens eine Funktionsbauteil bei bzw. während der Herstellung des Bauteilverbundes an den Grundkörper angespritzt, wobei der Bauteilverbund unter Verwendung eines Gasaußendruckverfahrens hergestellt wird.

Durch das Anwenden eines Gasaußendruckverfahrens während des Anspritzens des wenigstens einen Funktionsbauteils an den Grundkörper ist es möglich, Einfallstellen im Bereich des angespritzten Funktionsbauteils am Grundkörper zu verringern oder sogar vollständig zu vermeiden, und dennoch einen Bauteilverbund mit einer besonders komplexen und großflächigen Bauteilstruktur zu erzeugen. Einfallstellen können durch das vorliegende Verfahren verhindert oder zumindest derart reduziert werden, dass es zu keiner für einen Endkunden optisch nachteiligen Beeinträchtigung am Grundkörper bzw. am Strukturbauteil kommt.

Das wenigstens eine Funktionsbauteil ist dabei bevorzugt ein grundkörperunspezifisches Funktionsbauteil, das grundsätzlich nicht elementarer Bestandteil des Grundkörpers der Instrumententafel ist und auch separat vom Grundkörper im Kraftfahrzeug angeordnet werden könnte. Unter dem Grundkörper ist dabei grundsätzlich eine Instrumententafel-Grundstruktur zu verstehen, die zur Ausbildung oder Mitausbildung eines Instrumententafelbereichs des Kraftfahrzeugs sowie zur Aufnahme von Bedienelementen für einen Fahrzeuginsassen des Kraftfahrzeugs ausgestaltet und anordenbar ist. Unter dem Funktionsbauteil ist beispielsweise nicht eine bloße Durchgangsöffnung im Grundkörper zu verstehen, welche ein Anzeige- oder Bedienelement für einen Fahrzeuginsassen aufnehmen kann. Vielmehr ist unter dem wenigstens einen Funktionsbauteil ein Funktionsbauteil zu verstehen, das für eine erhebliche mechanische Wechselwirkung mit einem anderen Funktionsbauteil im Kraftfahrzeug zusammen wirkt oder zumindest dafür ausgestaltet sein kann. Das Funktionsbauteil kann beispielsweise ein Volumen aufweisen oder "aufspannen", das größer als 0,1 dm³ ist, beispielsweise zwischen 0,1 dm³ und 100 dm³, bevorzugt zwischen 0,5 dm³ und 50 dm³.

Der Gasaußendruck muss bei der Herstellung bzw. beim Spritzgießen des Bauteilverbundes nicht auf die gesamte Fläche des Bauteilverbundes aufgebracht werden. Vielmehr wird bei der Herstellung des Bauteilverbundes der Gasaußendruck gezielt zumindest in einem Bereich aufgebracht, in welchem das wenigstens eine Funktionsbauteil bei der Herstellung des Bauteilverbundes an den Grundkörper angespritzt wird. Dadurch kann etwaigen späteren Einfallstellen am Bauteilverbund gezielt entgegengewirkt werden.

Unter einem Bauteilverbund ist vorliegend ein Verbund von grundsätzlich zwei unterschiedlichen und/oder separaten Bauteilen zu verstehen, die für eine Platzersparnis sowie eine gezielte positive Wechselwirkung durch den Bauteilverbund miteinander verbunden werden. Das Herstellen des Bauteilverbundes ist dabei nicht darauf beschränkt, dass das wenigstens eine Funktionsbauteil erst nach Fertigstellung des Grundkörpers an diesem angespritzt wird. Vielmehr ist es vorliegend bevorzugt, dass das wenigstens eine Funktionsbauteil unmittelbar bei der Herstellung des Bauteilverbundes in den Grundkörper integriert bzw. an diesen angespritzt wird.

Das Kraftfahrzeug ist vorliegend nicht auf ein Straßenfahrzeug oder einen Personenkraftwagen beschränkt. So kann das erfindungsgemäße Verfahren auch zum Herstellen eines Bauteilverbundes für einen Lastkraftwagen, ein Wasserfahrzeug, ein Schienenfahrzeug, ein Luftfahrzeug und/oder einen Roboter zur Verfügung gestellt werden.

Gemäß der vorliegenden Erfindung weist bei dem Verfahren das wenigstens eine Funktionsbauteil einen Airbag-Schusskanal auf oder ist als solcher ausgestaltet. D.h., der Airbag-Schusskanal wird bei der Herstellung des Bauteilverbundes unter Verwendung eines Gasaußendruckverfahrens an den Grundkörper für die Instrumententafel angespritzt. Da es bei einem Anspritzen des Airbag-Schusskanals bisher zu enormen Oberflächen-Beeinträchtigungen bzw. Einfallstellen sowie Verspannungen in einem Grundkörper kam, welche einen entsprechenden Bauteilverbund auch noch nachträglich negativ beeinflussen konnten, wurde bisher von einem Anspritzen des Airbag-Schusskanals an einen Grundkörper für eine spritzblanke Instrumententafel Abstand genommen. Deshalb war es bisher üblich, für eine spritzblanke Instrumententafel einen Airbag-Schusskanal als Zusatzteil an einen Grundkörper für die Instrumententafel zu schweißen und anschließend eine Oberfläche der Instrumententafel zu kaschieren, beispielsweise mit einer sogenannten Slush-Haut. Dies ist jedoch zeitaufwändig und entsprechend teuer. Im Rahmen der vorliegenden Erfindung wurde nun herausgefunden, dass das Gasaußendruckverfahren auch bei großflächigen Strukturbauteilen wie dem Grundkörper für eine Instrumententafel anwendbar ist und sich darüber hinaus der Airbag-Schusskanal bei Anwendung dieses Verfahrens besonders vorteilhaft an den Grundkörper anspritzen lässt. Der daraus resultierende Bauteilverbund kann hierbei entsprechend schnell und kostengünstig hergestellt werden. Außerdem kommt beim Anspritzen des Airbag-Schusskanals an den Grundkörper bei Verwendung des Gasaußendruckverfahrens besonders wenig oder kein Zusatzmaterial zum Einsatz, wodurch der Bauteilverbund gewichtssparend bereitgestellt werden kann. Der vorliegende Airbag-Schusskanal dient zur Führung eines Gassackes des Airbags, insbesondere eines Beifahrerairbags, bei der Entfaltung desselben.

Es ist vorteilhaft, wenn das wenigstens eine Funktionsbauteil, insbesondere der Airbag-Schusskanal, an eine einer Sichtseite des Grundkörpers abgewandte Rückseite des Grundkörpers angespritzt wird. Durch die Verwendung des Gasaußendruckverfahrens wird Oberflächen-Beeinträchtigungen bzw. Einfallstellen sowie Verspannungen auf der Sichtseite des Grundkörpers, die sonst beim Anspritzen des Funktionsbauteils an die Rückseite des Grundkörpers auftreten können, wirksam entgegengewirkt, so dass die Sichtseite des Grundkörpers der Instrumententafel zumindest im Wesentlichen unbeeinflusst bleibt. Unter der Sichtseite des Grundkörpers der Instrumententafel wird dabei diejenige Seite des Grundkörpers der Instrumententafel verstanden, die im ins Fahrzeug eingebauten Zustand der Instrumententafel zumindest im Wesentlichen dem Fahrzeuginnenraum des Fahrzeugs zugewandt ist.

Ferner ist es im Rahmen der vorliegenden Erfindung vorgesehen, dass beim Herstellen des Bauteilverbundes Gasaußendruck auf einen flächigen Bereich des Grundkörpers um das wenigstens eine Funktionsbauteil herum aufgebracht wird. Bevorzugt ist der flächige Bereich des Grundkörpers aus den bereits geschilderten Gründen auf einer einer Sichtseite des Grundkörpers abgewandten Rückseite des Grundkörpers angeordnet. Hierdurch kann ein großer Teil einer Volumenschwindung während eines Erstarrungsprozesses kompensiert und als Ursache für Einfallstellen an der Oberfläche des Grundkörpers ausgeschlossen oder zumindest stark reduziert werden. Unter einem flächigen Bereich ist ein Bereich von beispielsweise mehr als 50 cm², insbesondere zwischen 50 cm² und 1000 cm², bevorzugt zwischen 100 cm² und 500 cm² zu verstehen, in welchem kein Vorsprung oder dergleichen ausgestaltet ist bzw. welcher sich homogen oder im Wesentlichen homogen und dabei bevorzugt eben erstreckt.

Außerdem kann es gemäß der vorliegenden Erfindung von Vorteil sein, wenn bei dem Herstellen des Bauteilverbundes das wenigstens eine Funktionsbauteil zumindest abschnittsweise mit einer CO2-Punktkühlung, die insbesondere durch ein Formwerkzeug zum Herstellen des Bauteilverbundes aufgebracht wird, gekühlt wird. Dabei wird in eine werkzeugseitige Kontur des Formwerkzeugs, die komplementär zu einem zugehörigen Abschnitt des Bauteilverbundes bzw. des Grundkörpers und/oder des Funktionsbauteils ausgestaltet ist, eine CO2-Kühlung bzw. eine CO2-Punktkühlung eingebracht, um ein erhöhtes Aufheizen von Konturbereichen im Formwerkzeug zu vermeiden. Dadurch werden Hot-Spots im Produkt vermieden, welche für die bereits vorstehend erwähnten Einfallstellen mitverantwortlich sind.

Von weiterem Vorteil kann es bei einem erfindungsgemäßen Verfahren sein, wenn bei dem Herstellen des Bauteilverbundes wenigstens ein Vertiefungsabschnitt des wenigstens einen Funktionsbauteils mit einer CO2-Punktkühlung, die insbesondere durch ein Formwerkzeug zum Herstellen des Bauteilverbundes aufgebracht wird, gezielt gekühlt wird. Der wenigstens eine Vertiefungsabschnitt wird dabei bevorzugt durch einen komplementär ausgestalteten Vorsprungsabschnitt des Formwerkzeugs gekühlt, wobei die CO2-Punktkühlung durch den wenigstens einen Vorsprungsabschnitt jeweils zumindest teilweise in den zugehörigen bzw. komplementären Vertiefungsabschnitt eingebracht wird. Durch die gezielte CO2-Punktkühlung des Funktionsbauteils auch in dem wenigstens einen Vertiefungsabschnitt, d.h., in einem inneren Bereich des Funktionsbauteils, ist es möglich, etwaige Einfallstellen besonders zuverlässig zu verringern oder sogar zu verhindern. Der wenigstens eine Vertiefungsabschnitt kann beispielsweise als wenigstens ein Vertiefungsabschnitt oder als eine Vielzahl von Vertiefungsabschnitten einer Versteifungsstruktur eines Airbag-Schusskanals ausgestaltet sein. Der wenigstens eine Vertiefungsabschnitt des Funktionsbauteils ist dabei bevorzugt als wenigstens ein Taschenabschnitt des Funktionsbauteils ausgestaltet.

Darüber hinaus ist es gemäß der vorliegenden Erfindung möglich, dass der Bauteilverbund unter Verwendung des Gasaußendruckverfahrens sowie unter Verwendung von Polypropylen (PP) hergestellt wird. Dabei wird insbesondere der Grundkörper unter Verwendung von Polypropylen hergestellt. Durch die Verwendung von Polypropylen kann der Bauteilverbund bzw. der Grundkörper mit besonders vorteilhaften Material- und entsprechenden Oberflächeneigenschaften bereitgestellt werden. Der Bauteilverbund wird dabei derart hergestellt, dass dieser nach seiner Herstellung überwiegend Polypropylen aufweist oder im Wesentlichen, vollständig oder zumindest im Wesentlichen vollständig aus Polypropylen besteht. Durch das verwendete Polypropylen kann der Bauteilverbund oder zumindest eine Oberfläche des Grundkörpers, die bei der Verwendung in einem Kraftfahrzeug in Richtung einer Fahrzeugkabine angeordnet ist, in Kombination mit dem Gasaußendruckverfahren spritzblank oder genarbt hergestellt werden. Unter einer spritzblanken oder genarbten Herstellung ist eine Herstellung des Bauteilverbundes mit einer zumindest abschnittsweise definierten Oberflächengüte oder -struktur nach dem Spritzgießen zu verstehen. D.h., wenn der Bauteilverbund beispielsweise spritzblank hergestellt wird, weist eine Oberfläche des Bauteilverbundes nach dem Spritzgießen eine definierte Oberflächengüte auf. Die gewünschte Oberflächengüte kann dabei insbesondere durch das Gasaußendruckverfahren während des Spritzgießens erreicht werden. Durch das angewandte Gasaußendruckverfahren kombiniert mit dem verwendeten Polypropylen weist der Bauteilverbund keine oder keine wesentlichen sichtbaren Einfallstellen und eine entsprechend spritzblanke Oberfläche auf. D.h., bereits direkt nach dem Spritzgießen ist die Oberfläche des Bauteilverbundes bzw. des Grundkörpers "blank" bzw. wie gewünscht genarbt.

Gemäß eines weiteren Aspekts der vorliegenden Erfindung wird ein Bauteilverbund für ein Kraftfahrzeug bereitgestellt, wobei der Bauteilverbund gemäß eines wie vorstehend im Detail beschriebenen Verfahrens hergestellt ist. Damit bringt der erfindungsgemäße Bauteilverbund die gleichen Vorteile mit sich, wie sie ausführlich mit Bezug auf das erfindungsgemäße Verfahren beschrieben worden sind.

Im Rahmen der vorliegenden Erfindung wird ferner der Bauteilverbund für ein Kraftfahrzeug bereitgestellt, wobei der Bauteilverbund einen Grundkörper für eine Instrumententafel sowie wenigstens ein Funktionsbauteil aufweist und der Grundkörper zusammen mit dem wenigstens einen Funktionsbauteil als integrales Kunststoff-Spritzgussteil unter Verwendung eines Gasaußendruckverfahrens hergestellt ist. Durch die integrale Herstellung bzw. den entsprechend integralen Aufbau des Bauteilverbundes kann dieser besonders leicht und dennoch stabil bereitgestellt werden. Unter einem integralen Spritzgussteil ist vorliegend ein einstückiges oder monolithisches Spritzgussbauteil zu verstehen.

Das wenigstens eine Funktionsbauteil ist gemäß der vorliegenden Erfindung bevorzugt als ein Airbag-Schusskanal, insbesondere als ein Beifahrerairbag-Schusskanal, bereitgestellt. Demnach sind der Grundkörper und der Airbag-Schusskanal als einstückiges oder monolithisches Spritzgussbauteil bzw. als ein entsprechender Bauteilverbund bereitgestellt, der keine Schweißnaht oder ein anderes stoff-, form- und/oder kraftschlüssiges zusätzliches Verbindungselement aufweist bzw. benötigt.

Gemäß eines weiteren Aspekts der vorliegenden Erfindung wird ein Kraftfahrzeug mit einem wie vorstehend beschriebenen Bauteilverbund zur Verfügung gestellt. Damit bringt auch das erfindungsgemäße Kraftfahrzeug die gleichen Vorteile mit sich, wie sie ausführlich mit Bezug auf das erfindungsgemäße Verfahren beschrieben worden sind.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten und räumlicher Anordnungen, können sowohl für sich als auch in den verschiedenen Kombinationen erfindungswesentlich sein. Es zeigen jeweils schematisch:
Fig. 1 einen Bauteilverbund gemäß einer Ausführungsform der vorliegenden Erfindung,
Fig. 2 einen Ausschnitt eines Bauteilverbundes gemäß der in Fig. 1 dargestellten Ausführungsform der vorliegenden Erfindung,
Fig. 3 ein Kraftfahrzeug mit dem in Fig. 1 dargestellten Bauteilverbund, und
Fig. 4 ein Ablaufdiagramm zum Erläutern eines erfindungsgemäßen Verfahrens zum Herstellen eines Bauteilverbunds.

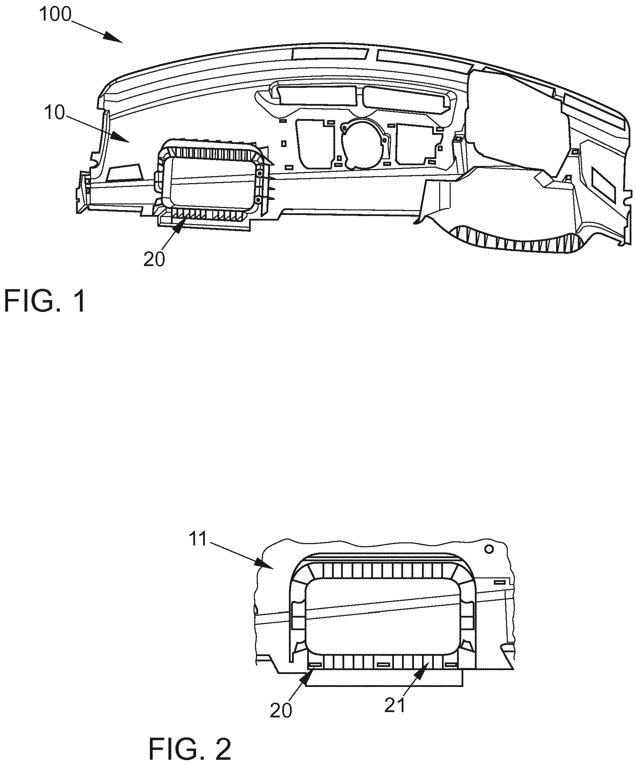

Elemente mit gleicher Funktion und Wirkungsweise sind in den Figuren 1 bis 4 jeweils mit denselben Bezugszeichen versehen.

Fig. 1 zeigt einen Bauteilverbund 100 für ein Kraftfahrzeug 1 gemäß einer bevorzugten Ausführungsform der vorliegenden Erfindung. Der Bauteilverbund 100 gemäß Fig. 1 weist einen im Wesentlichen aus Polypropylen bestehenden Grundkörper 10 für eine Instrumententafel des Kraftfahrzeugs 1 sowie ein Funktionsbauteil 20 auf, wobei das Funktionsbauteil 20 als Airbag-Schusskanal an einer Hinterseite des Grundkörpers 10, die eine einer Sichtseite des Grundkörpers 10 abgewandte Rückseite des Grundkörpers 10 darstellt, ausgestaltet ist. Die Hinterseite oder Rückseite des Grundkörpers 10 entspricht dabei einer Seite des Grundkörpers 10 für die Instrumententafel, die in Richtung oder im Wesentlichen in Richtung einer Vorderseite des Kraftfahrzeugs 1 zeigt, wenn der Bauteilverbund 100 im Kraftfahrzeug 1 verbaut ist, und somit im verbauten Zustand des Bauteilverbunds 100 dem Fahrzeuginnenraum des Kraftfahrzeugs 1 abgewandt ist. Entsprechend ist unter einer Vorderseite des Grundkörpers 10 für die Instrumententafel eine Sichtseite zu verstehen, die in Richtung oder im Wesentlichen in Richtung eines Fahrzeuginnenraums des Kraftfahrzeugs 1 zeigt, wenn der Bauteilverbund 100 im Kraftfahrzeug 1 verbaut ist.

Der Grundkörper 10 ist gemäß Fig. 1 zusammen mit dem als Airbag-Schusskanal ausgestalteten Funktionsbauteil 20 unter Verwendung eines Gasaußendruckverfahrens als integrales bzw. einstückiges Kunststoff-Spritzgussteil hergestellt. Der Airbag-Schusskanal 20 aus Kunststoff ist dabei als Airbag-Schusskanal für einen Beifahrerairbag bzw. als Beifahrerairbag-Schusskanal ausgestaltet und an einer entsprechend geeigneten Position am Grundkörper 10 für die Instrumententafel, nämlich an der Hinterseite bzw. Rückseite des Grundkörpers 10, angeordnet.

Fig. 2 zeigt eine vergrößerte Darstellung der Anordnung des als Airbag-Schusskanal ausgestalteten Funktionsbauteils 20 am Grundkörper 10. In Fig. 2 ist dabei ein flächiger Bereich 11 des Grundkörpers 10 dargestellt, der um den Airbag-Schusskanal 20 herum ausgestaltet ist und über welchen bei der Herstellung des Bauteilverbundes 100 ein Gasaußendruck aufgebracht wird. Der flächige Bereich 11 ist an der Hinterseite bzw. Rückseite des Grundkörpers 10 angeordnet. In Fig. 2 sind außerdem mehrere Vertiefungen 21 einer Versteifungsstruktur des Airbag-Schusskanals 20 dargestellt.

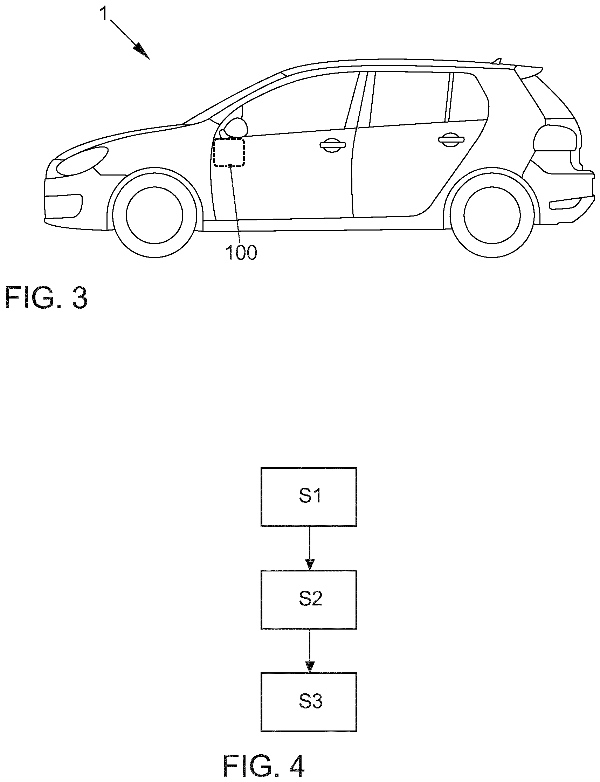

In Fig. 3 ist grob schematisch ein Kraftfahrzeug 1 mit einem gemäß Fig. 1 dargestellten Bauteilverbund 100 gezeigt, wobei der Bauteilverbund 100 in einem Instrumententafelbereich des Kraftfahrzeugs 1 bzw. als Bestandteil einer Instrumententafel des Kraftfahrzeugs 1 angeordnet ist.

Mit Bezug auf Fig. 4 wird anschließend ein Verfahren zum Herstellen eines erfindungsgemäßen Bauteilverbundes 100 für eine Instrumententafel bzw. ein Kraftfahrzeug 1 mit dieser Instrumententafel beschrieben.

Zur Herstellung des Bauteilverbundes 100 werden in einem ersten Schritt S1 ein Kunststoff-Grundkörper 10 für eine Instrumententafel sowie ein Kunststoff-Funktionsbauteil 20 in Form eines Airbag-Schusskanals bereitgestellt. Als Kunststoffmaterial wird bevorzugt Polypropylen oder ein gefülltes Polypropylen oder ein faserverstärktes Polypropylen oder ein Polypropylen-Derivat verwendet.

In einem zweiten, anschließenden oder zumindest teilweise parallel ablaufenden Schritt S2 wird das Funktionsbauteil 20 bei der Herstellung des Bauteilverbundes 100 an den Grundkörper 10 angespritzt, wobei der Bauteilverbund 100 unter Verwendung eines Gasaußendruckverfahrens hergestellt wird. Hierbei wird Gasaußendruck auf einen flächigen Bereich 11 des Grundkörpers 10 um das wenigstens eine Funktionsbauteil 20 herum aufgebracht, wobei der flächige Bereich 11 an der der Sichtseite des Grundkörpers 10 abgewandten Rückseite des Grundkörpers 10 angeordnet ist.

In einem dritten Schritt, der während der Herstellung des Bauteilverbundes 100 durchgeführt wird, wird das Funktionsbauteil 20 abschnittsweise mit einer CO2-Punktkühlung, die durch ein Formwerkzeug zum Herstellen des Bauteilverbundes 100 aufgebracht wird, gekühlt. Genauer gesagt werden bei diesem Schritt mehrere Taschen bzw. Vertiefungsabschnitte 21 einer Versteifungsstruktur des Funktionsbauteils 20 mit einer CO2-Punktkühlung, die durch das Formwerkzeug zum Herstellen des Bauteilverbundes 100 aufgebracht wird, gezielt gekühlt.

Neben den beschriebenen Ausführungsformen lässt die vorliegende Erfindung noch weitere Ausgestaltungen zu.

### Bezugszeichenliste

- 1: Kraftfahrzeug

- 10: Grundkörper
- 11: flächiger Bereich
- 20: Funktionsbauteil, insbesondere Airbag-Schusskanal
- 21: Vertiefungsabschnitt

- 100: Bauteilverbund

## Patentansprüche

1. Verfahren zum Herstellen eines Bauteilverbundes (100) für ein Kraftfahrzeug (1), wobei
der Bauteilverbund (100) einen Grundkörper (10) für eine Instrumententafel des Kraftfahrzeugs (1) sowie wenigstens ein Funktionsbauteil (20) aufweist, wobei das wenigstens eine Funktionsbauteil (20) einen Airbag-Schusskanal aufweist oder als solcher ausgestaltet ist, **dadurch gekennzeichnet, dass** das
wenigstens eine Funktionsbauteil (20) bei der Herstellung des Bauteilverbundes (100) an den Grundkörper (10) angespritzt wird und der Bauteilverbund (100) unter Verwendung eines Gasaußendruckverfahrens hergestellt wird,
wobei beim Herstellen des Bauteilverbundes (100) Gasaußendruck auf einen flächigen Bereich (11) des Grundkörpers (10) um das wenigstens eine Funktionsbauteil (20) herum aufgebracht wird.

2. Verfahren nach dem voranstehenden Anspruch,
**dadurch gekennzeichnet,**
**dass** das wenigstens eine Funktionsbauteil (20) an eine einer Sichtseite des Grundkörpers (10) abgewandte Rückseite des Grundkörpers (10) angespritzt wird.

3. Verfahren nach einem der voranstehenden Ansprüche,
**dadurch gekennzeichnet,**
**dass** der flächige Bereich (11) des Grundkörpers (10) auf einer einer Sichtseite des Grundkörpers (10) abgewandten Rückseite des Grundkörpers (10) angeordnet ist.

4. Verfahren nach einem der voranstehenden Ansprüche,
**dadurch gekennzeichnet,**
**dass** bei dem Herstellen des Bauteilverbundes (100) das wenigstens eine Funktionsbauteil (20) zumindest abschnittsweise mit einer CO2-Punktkühlung, die insbesondere durch ein Formwerkzeug zum Herstellen des Bauteilverbundes (100) aufgebracht wird, gekühlt wird.

5. Verfahren nach einem der voranstehenden Ansprüche,
**dadurch gekennzeichnet,**
**dass** bei dem Herstellen des Bauteilverbundes (100) wenigstens ein Vertiefungsabschnitt (21) des wenigstens einen Funktionsbauteils (20) mit einer CO2-Punktkühlung, die insbesondere durch ein Formwerkzeug zum Herstellen des Bauteilverbundes (100) aufgebracht wird, gekühlt wird.

6. Verfahren nach einem der voranstehenden Ansprüche,
**dadurch gekennzeichnet,**
**dass** der Bauteilverbund (100) unter Verwendung des Gasaußendruckverfahrens sowie unter Verwendung von Polypropylen hergestellt wird.

7. Bauteilverbund (100) für ein Kraftfahrzeug (1), aufweisend einen Grundkörper (10) für eine Instrumententafel des Kraftfahrzeugs (1) sowie wenigstens ein Funktionsbauteil (20), **dadurch gekennzeichnet,**
**dass** der Grundkörper (10) zusammen mit dem wenigstens einen Funktionsbauteil (20) unter Verwendung eines Gasaußendruckverfahrens als integrales Spritzgussteil hergestellt ist, wobei das wenigstens eine Funktionsbauteil (20) einen Airbag-Schusskanal aufweist oder ein Airbag-Schusskanal ist,
wobei der Bauteilverbund (100) gemäß eines Verfahrens nach einem der voranstehenden Ansprüche hergestellt ist.

8. Bauteilverbund nach Anspruch 7,
**dadurch gekennzeichnet,**
**dass** das wenigstens eine Funktionsbauteil (20) an eine einer Sichtseite des Grundkörpers (10) abgewandte Rückseite des Grundkörpers (10) angespritzt ist.

9. Kraftfahrzeug (1) mit einem Bauteilverbund (100) nach Anspruch 7 oder 8.

## Claims

1. Method for manufacturing a component assembly (100) for a motor vehicle (1), the component assembly (100) having a base body (10) for an instrument panel of the motor vehicle (1), and at least one functional component (20), the at least one functional component (20) having an airbag ejection channel or being designed as such,
**characterized in that**
the at least one functional component (20) is injection-molded onto the base body (10) during the manufacture of the component assembly (100) and the component assembly (100) is manufactured by using an external gas pressure method,
external gas pressure being applied to a flat region (11) of the base body (10) around the at least one functional component (20) during the manufacture of the component assembly (100).

2. Method according to the preceding claim,
**characterized in that**
the at least one functional component (20) is injection-molded onto a rear side of the base body (10) facing away from a visible side of the base body (10).

3. Method according to any of the preceding claims,
**characterized in that**
the flat region (11) of the base body (10) is arranged on a rear side of the base body (10) facing away from a visible side of the base body (10).

4. Method according to any of the preceding claims,
**characterized in that**
during the manufacture of the component assembly (100), the at least one functional component (20) is cooled, at least in portions, using CO2 spot cooling, which is applied in particular by a molding tool for manufacturing the component assembly (100).

5. Method according to any of the preceding claims,
**characterized in that**
during the manufacture of the component assembly (100), at least one recessed portion (21) of the at least one functional component (20) is cooled using CO2 spot cooling, which is applied in particular by a molding tool for manufacturing the component assembly (100).

6. Method according to any of the preceding claims,
**characterized in that**
the component assembly (100) is manufactured by using the external gas pressure method and by using polypropylene.

7. Component assembly (100) for a motor vehicle (1), comprising a base body (10) for an instrument panel of the motor vehicle (1), and at least one functional component (20),
**characterized in that**
the base body (10) is manufactured together with the at least one functional component (20) as an integral injection-molded part by using an external gas pressure method, the at least one functional component (20) having an airbag ejection channel or being an airbag ejection channel,
the component assembly (100) being manufactured according to a method according to any of the preceding claims.

8. Component assembly according to claim 7,
**characterized in that**
the at least one functional component (20) is injection-molded onto a rear side of the base body (10) facing away from a visible side of the base body (10).

9. Motor vehicle (1) comprising a component assembly (100) according to claim 7 or claim 8.

## Revendications

1. Procédé permettant la fabrication d'un ensemble de composants (100) pour un véhicule automobile (1), dans lequel l'ensemble de composants (100) présente un corps de base (10) pour un tableau de bord du véhicule automobile (1) ainsi qu'au moins un composant fonctionnel (20), dans lequel l'au moins un composant fonctionnel (20) présente un canal de tir de coussin de sécurité gonflable ou est conçu comme tel, **caractérisé en ce que** l'au moins un composant fonctionnel (20) est moulé par injection sur le corps de base (10) lors de la fabrication de l'ensemble de composants (100) et l'ensemble de composants (100) est fabriqué en utilisant un procédé de pression extérieure de gaz,
dans lequel une pression extérieure de gaz est appliquée sur une zone plane (11) du corps de base (10) autour de l'au moins un composant fonctionnel (20) lors de la fabrication de l'ensemble de composants (100).

2. Procédé selon la revendication précédente,
**caractérisé en ce**
**que** l'au moins un composant fonctionnel (20) est moulé par injection sur une face arrière du corps de base (10) opposée à une face visible du corps de base (10).

3. Procédé selon l'une des revendications précédentes,
**caractérisé en ce**
**que** la zone plane (11) du corps de base (10) est disposée sur une face arrière du corps de base (10) opposée à une face visible du corps de base (10).

4. Procédé selon l'une des revendications précédentes,
**caractérisé en ce**
**que** lors de la fabrication de l'ensemble de composants (100), l'au moins un composant fonctionnel (20) est refroidi au moins par sections avec un refroidissement ponctuel au CO2, qui est appliqué en particulier par un outil de moulage permettant la fabrication de l'ensemble de composants (100).

5. Procédé selon l'une des revendications précédentes,
**caractérisé en ce**
**que**, lors de la fabrication de l'ensemble de composants (100), au moins une section en creux (21) de l'au moins un composant fonctionnel (20) est refroidie par un refroidissement ponctuel au CO2, qui est appliqué en particulier par un outil de moulage permettant la fabrication de l'ensemble de composants (100).

6. Procédé selon l'une des revendications précédentes,
**caractérisé en ce**
**que** l'ensemble de composants (100) est fabriqué en utilisant le procédé de pression extérieure de gaz ainsi qu'en utilisant du polypropylène.

7. Ensemble de composants (100) pour un véhicule automobile (1), présentant un corps de base (10) pour un tableau de bord du véhicule automobile (1) ainsi qu'au moins un composant fonctionnel (20),
**caractérisé en ce**
**que** le corps de base (10) est fabriqué conjointement avec l'au moins un composant fonctionnel (20) en utilisant un procédé de pression extérieure de gaz sous forme de pièce moulée par injection intégrale, dans lequel l'au moins un composant fonctionnel (20) présente un canal de tir de coussin de sécurité gonflable ou est un canal de tir de coussin de sécurité gonflable,
dans lequel l'ensemble de composants (100) est fabriqué selon un procédé selon l'une des revendications précédentes.

8. Ensemble de composants selon la revendication 7,
**caractérisé en ce**
**que** l'au moins un composant fonctionnel (20) est moulé par injection sur une face arrière du corps de base (10) opposée à une face visible du corps de base (10).

9. Véhicule automobile (1) comportant un ensemble de composants (100) selon la revendication 7 ou 8.
